# EUROPÄISCHE PATENTSCHRIFT

(11) **EP 4 102 342 B1**
(45) Veröffentlichungstag und Bekanntmachung des Hinweises auf die Patenterteilung: **03.09.2025**
(21) Anmeldenummer: 22155894.3
(22) Anmeldetag: 09.02.2022
(51) Int. Cl.: G06F 3/033, B23K 26/38

(54) **VERFAHREN ZUM ERSTELLEN EINES SCHACHTELUNGSPLANES SOWIE FERTIGUNGSSYSTEM**
METHOD FOR MANUFACTURING A NESTING PLAN AND MANUFACTURING SYSTEM
PROCÉDÉ DE CRÉATION D'UN PLAN D'EMBOÎTEMENT, AINSI QUE SYSTÈME DE FABRICATION

(30) Priorität: 08.06.2021 DE 102021114716
(43) Veröffentlichungstag der Anmeldung: 14.12.2022
(73) Patentinhaber: Claas, Krasnodar, Krasnodar 350039 (RU)
(72) Erfinder: Parshin, Artemiy, 350020 Krasnodar (RU)
(74) Vertreter: CLAAS Gruppe

(56) Entgegenhaltungen:
- METALIXCNCKAD: "AutoNest V16 Manual Nesting Techniques", 12 December 2016 (2016-12-12), XP055932393, Retrieved from the Internet <URL:https://www.youtube.com/watch?v=ocWj3CAX428&ab_channel=MetalixCncKad>
- KASANMASCHEFF MARKUS: "Windows 10: Mauszeiger mit Tastatur steuern - So geht's | NETZWELT", 14 June 2020 (2020-06-14), XP055932399, Retrieved from the Internet <URL:https://www.netzwelt.de/anleitung/179022-windows-10-so-mauszeiger-tastatur-steuern.html> [retrieved on 20220616]

## Beschreibung

Die vorliegende Erfindung betrifft ein Verfahren zum Erstellen eines Schachtelungsplanes gemäß dem Oberbegriff des Anspruches 1. Weiterhin betrifft die Erfindung ein Fertigungssystem mit einer Steuerungsvorrichtung gemäß Anspruch 13.

Ein Verfahren zum Erstellen eines Schachtelungsplanes sowie ein Fertigungssystem der eingangs genannten Art sind beispielsweise aus der DE 10 2018 126 077 A1 oder der EP 2 029 313 B1 bekannt.

Metalixcnckad: "AutoNest V16 Manual Nesting Techniques", Youtube offenbart ein Verfahren zum Erstellen eines Schachtelungsplans. Kasanmascheff Markus: "Windows 10: Mauszeiger mit Tastatur steuern - So geht's", Netzwelt offenbart ein gleichnamiges Verfahren. GuruBrew: "How to Use XBox 360 Controller with Mach3 CNC Software", Youtube offenbart ein Verfahren zum Verfahren der Achsen einer CNC-Maschine mittels eines XBox 360 - Controllers.

Für das Erstellen des Schachtelungsplanes wird ein Computerprogrammprodukt auf einer Steuerungsvorrichtung ausgeführt, welches auf die Steuerung mit Tastatur und Computermaus ausgelegt ist. Für das Erstellen des Schachtelungsplanes werden aus einer Materialtafel auszuschneidenden Werkstücken entsprechende Bauteilkonturen aus einer in einer Speichereinheit der Steuerungsvorrichtung hinterlegten Stückliste ausgewählt und in einer von einer Anzeigevorrichtung der Steuerungsvorrichtung dargestellten zweidimensionalen Planungsebene, welche die Materialtafel abbildet, angeordnet. Das Auswählen und Bewegen der jeweiligen Bauteilkontur eines Werkstücks sowie das Auf- und Abwärtsbewegen der Bildlaufleiste, um sich in einer umfangreichen Stückliste mit Werkstücken zu einem auszuwählenden Werkstück zu bewegen, erfolgt mittels der Bewegung der Computermaus und der daran angeordneten Bedienelemente wie Tasten, Scrollrad. Das Drehen einer Bauteilkontur erfolgt mittels eines sogenannten Scrollrades der Computermaus, wobei die Drehung in diskreten Schritten erfolgt und jedem Schritt der gleiche Wert für einen voreingestellten Winkel zugeordnet ist. Um solche voreingestellten Einstellparameter, wie beispielsweise das Drehen der Bauteilkontur um einen von einem voreingestellten Winkel abweichenden Winkel, zu ändern, bedarf es einer kombinierten Bedienung von Computermaus und Tastatur, um in einer verschachtelten, oftmals unübersichtlichen Menüstruktur den zu ändernden Einstellparameter auszuwählen und verändern zu können.

Der Erfindung liegt somit die Aufgabe zugrunde, ein Verfahren zum Erstellen eines Schachtelungsplanes sowie ein Fertigungssystem der eingangs genannten Art weiterzubilden, welche eine flexiblere und einfachere Bedienung ermöglichen.

Diese Aufgabe wird aus verfahrenstechnischer Sicht ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Aus vorrichtungstechnischer Sicht erfolgt eine Lösung der Aufgabe ausgehend vom Oberbegriff des nebengeordneten Anspruchs 13 in Verbindung mit dessen kennzeichnenden Merkmalen.

Gemäß Anspruch 1 wird ein Verfahren zum Erstellen eines Schachtelungsplanes vorgeschlagen, wobei mittels des Schachtelungsplanes ein Schneidprozess einer Bearbeitungsanlage zum Ausschneiden von Werkstücken aus einer Materialtafel durch eine Recheneinheit einer Steuerungsvorrichtung angesteuert wird, wobei den auszuschneidenden Werkstücken entsprechende Bauteilkonturen aus einer in einer Speichereinheit der Steuerungsvorrichtung hinterlegten Stückliste ausgewählt und in einer von einer Anzeigevorrichtung der Steuerungsvorrichtung dargestellten zweidimensionalen Planungsebene, welche die Materialtafel abbildet, angeordnet werden. Erfindungsgemäß ist vorgesehen, dass für das Auswählen von Bauteilkonturen und das Anordnen der Bauteilkonturen in der Planungsebene mit minimierten Zwischenräumen genau eine mit der Steuerungsvorrichtung verbundene Bedieneinheit verwendet wird, welche mehrere von einem Benutzer zu betätigende unidirektionale Bedienelemente sowie zumindest zwei direktionale Richtungspads umfasst, durch die eine Aktivität eines Auswahlcursor auf der Anzeigevorrichtung gesteuert sowie zumindest eine durch den Auswahlcursor ausgewählte Bauteilkontur zur Minimierung der Zwischenräume gegenüber in der Planungsebene bereits angeordneten Bauteilkonturen positioniert wird. Die Bedieneinheit ermöglicht gegenüber der Computermaus und der Tastatur eine einfachere und flexiblere Bedienung, um einen Schachtelungsplan zu erstellen. Weiter vorteilhaft ist, dass die für das Bedienen notwendigen Eingabe- und Auswahlmittel, d.h. die unidirektionalen Bedienelemente sowie die zumindest zwei direktionalen Richtungspads in einer Bedieneinheit vereint sind.

Unter dem Begriff unidirektionale Bedienelemente werden insbesondere als Taster ausgeführte Bedienelemente verstanden. Der Begriff direktionale Richtungspads beschreibt erfindungsgemäß hebelförmige oder joystickartige Bedienmittel, die eine mehrachsige Bewegung ermöglichen.

Wesentlich ist die grundsätzliche Überlegung, dass für eine verbesserte Durchführung des Verfahrens die Steuerung des Auswahlcursors auf der Anzeigevorrichtung effizienter wird. Hierzu bedarf es einerseits einer langsamen aber exakten Bewegung des Auswahlcursors für das Schachteln von ausgewählten Bauteilkonturen sowie andererseits einer schnellen Bewegung des Auswahlcursors im Darstellungsbereich der Planungsebene.

Erfindungsgemäß wird von der Recheneinheit zumindest ein in der Speichereinheit der Steuerungsvorrichtung hinterlegter Steuerungsalgorithmus ausgeführt, durch welchen den Bedienelementen sowie den zumindest zwei Richtungspads der Bedieneinheit von diesen auszuführende Steuerbefehle zugewiesen werden.

Insbesondere können zwei unidirektionale Bedienelemente vorgesehen sein, denen Steuerbefehle zugewiesen werden, durch die eine Auswahl einer Bauteilkontur aus der von der Anzeigevorrichtung dargestellten Stückliste durchgeführt wird. Beispielsweise kann ein einmaliges Drücken eines der beiden Bedienelemente zur Auswahl eines aktiven Werkstücks und der damit verbundenen Bauteilkontur verwendet werden.

Weiterhin können den zwei unidirektionalen Bedienelemente Steuerbefehle zugewiesen werden, durch eine gegensinnige Ansteuerung der Bewegung entlang einer der dargestellten Stückliste zugeordneten Bildlaufleiste durchgeführt wird. Die beiden Bedienelemente ermöglichen eine Auf- und Abwärtsbewegung der Bildlaufleisten, wenn aus einer umfangreichen Stückliste mit Werkstücken auszuwählen ist, deren Darstellung über die sichtbare Darstellfläche der Anzeigevorrichtung hinausgehen. Dabei können die Steuerbefehle beispielsweise ein dauerhaftes Gedrückt halten eines der beiden Bedienelemente umfassen, das zur Auf- und Abwärtsbewegung der Bildlaufleisten mittels des Auswahlcursors führt.

Gemäß einer Weiterbildung kann zumindest einem weiteren Bedienelement der Bedieneinheit ein Steuerbefehl zugewiesen werden, durch den beim Betätigen des Bedienelementes das Drehen der ausgewählten Bauteilkontur um einen voreingestellten Winkel angesteuert wird. Das Drehen erfolgt in diskreten Schritten in Abhängigkeit von der Anzahl der Betätigung des unidirektionalen Bedienelementes.

Weiterhin kann einem weiteren Bedienelement der Bedieneinheit ein Steuerbefehl zugewiesen werden, durch den beim Betätigen des Bedienelementes eine wechselweise Änderung zwischen einem ersten Wert des voreingestellten Winkels auf einen zweiten, höheren, Wert des voreingestellten Winkels durchgeführt wird. Hierdurch können dem für das Drehen zu betätigende Bedienelement bedarfsabhängig der erste Wert oder der zweite Wert des voreingestellten Winkels im Wechsel zugewiesen werden. So kann der erste Wert beispielsweise einem voreingestellten Winkel von 1° entsprechen, während der zweite Wert einem voreingestellten Winkel von 10° entspricht. Der Benutzer kann somit eine Drehung der ausgewählten Bauteilkontur mit zwei unterschiedlichen Winkeln bewirken, ohne dafür mehre Zwischenschritte zur Änderung des voreingestellten Winkels vornehmen zu müssen, wie es im Stand der Technik vorgesehen und erforderlich ist. Für den ersten Wert und den zweiten Wert des voreingestellten Winkels können auch hiervon abweichende Werte eingestellt werden, z.B. 0,5° und 5°.

Insbesondere kann einem weiteren Bedienelement der Bedieneinheit ein Steuerbefehl zugewiesen werden, durch den beim Betätigen des Bedienelementes eine Drehung der ausgewählten Bauteilkontur um einen Winkel von 90° angesteuert wird. Bevorzugt wird durch das Betätigen des Bedienelementes eine Drehung der ausgewählten Bauteilkontur im Uhrzeigersinn ausgeführt. Dieses Bedienelement ermöglicht eine schnelle Drehung zur Anpassung der Lage für ein effizientes Anordnen der Bauteilkontur in der Planungsebene, während das andere für das Drehen vorgesehene Bedienelement, dem wechselweise zwei Werte für Winkel zugewiesen werden, für die Feinjustierung der Lage der Bauteilkontur betätigt werden kann.

Gemäß einer Weiterbildung können durch die Bewegung zumindest eines der beiden direktionalen Richtungspads von der Bedieneinheit Steuersignale generiert und von der Steuerungsvorrichtung empfangen werden, die von der Recheneinheit in Bewegungskoordinaten umgewandelt werden, durch welche eine Bewegung des Auswahlcursors oder einer ausgewählten Bauteilkontur auf der Anzeigevorrichtung angesteuert wird. Die Richtung, in welche das Richtungspad bei dessen Betätigung ausgelenkt wird, gibt damit die eine Bewegungsrichtung des Auswahlcursors oder einer ausgewählten Bauteilkontur vor.

Erfindungsgemäß wird den zumindest zwei Richtungspads jeweils ein Steuerbefehl zugewiesen, durch den jedem Richtungspad eine unterschiedliche Bewegungsgeschwindigkeit der Bewegung des Auswahlcursors oder einer ausgewählten Bauteilkontur auf der Anzeigevorrichtung zugewiesen wird.

Hierbei kann dem einen Richtungspad per Steuerbefehl eine Bewegungsgeschwindigkeit zugewiesen werden, die kleiner als eine Bewegungsgeschwindigkeit des anderen Richtungspads ist.

Insbesondere kann in Abhängigkeit von einer Auslenkrichtung der zumindest zwei Richtungspads bei deren im Wesentlichen gleichzeitiger Betätigung durch die Ausführung von Vektoradditionsregeln eine von den jeweils per Steuerbefehl zugewiesenen Bewegungsgeschwindigkeiten abweichende Bewegungsgeschwindigkeit der Bewegung des Auswahlcursors oder einer ausgewählten Bauteilkontur auf der Anzeigevorrichtung zugewiesen werden. Bevorzugt bildet die höhere zugewiesene Bewegungsgeschwindigkeit den Ausgangspunkt bei der Ausführung von Vektoradditionsregeln. So kann beispielsweise bei einer identischen Auslenkrichtung der zumindest zwei Richtungspads die Bewegungsgeschwindigkeit aufaddiert werden, wodurch sich eine dritte, höhere Bewegungsgeschwindigkeit ergibt. Eine gegensätzliche Auslenkrichtung der der zumindest zwei Richtungspads bewirkt, dass sich eine Bewegungsgeschwindigkeit einstellt, die zwischen den beiden zugewiesenen Bewegungsgeschwindigkeiten liegt. Als weiteres Beispiel sei genannt, dass bei im Wesentlichen gleichzeitiger Betätigung der Richtungspads durch eine Auslenkbewegung des einen Richtungspads mit geringerer zugewiesener Bewegungsgeschwindigkeit nach links und des anderen Richtungspads mit höherer zugewiesener Bewegungsgeschwindigkeit nach vorne, eine langsame Bewegung des Auswahlcursors oder der ausgewählten Bauteilkontur nach links und zugleich eine schnelle aufwärtsgerichtete Bewegung bewirkt wird.

Des Weiteren kann bei einer im Wesentlichen gleichzeitigen Bewegung der zumindest zwei Richtungspads in in einer gemeinsamen Richtungsebene liegenden identischen Auslenkrichtung eine Vektoraddition der beiden Bewegungsgeschwindigkeiten durchgeführt werden, wobei bei einer im Wesentlichen gleichzeitigen Bewegung in einander diametral entgegengesetzten Auslenkrichtungen in der Richtungsebene eine Vektorsubtraktion durchgeführt werden kann.

Gemäß einer bevorzugten Weiterbildung kann bei einer im Wesentlichen gleichzeitigen Betätigung der zumindest zwei Richtungspads, bei der das eine Richtungspad in einer gegenüber dem anderen Richtungspad von einer gemeinsamen Richtungsebene abweichenden Auslenkrichtung bewegt wird, der Auswahlcursor für die jeweilige durch die Betätigung des jeweiligen Richtungspads vorgegebene Bewegungsrichtung des Auswahlcursors oder einer ausgewählten Bauteilkontur mit der jeweiligen den Richtungspads individuell zugewiesenen Bewegungsgeschwindigkeit bewegt werden.

Bevorzugt können den zumindest zwei Richtungspads unterschiedliche Beschleunigungsprofile zugeordnet werden, mittels derer die Bewegungsgeschwindigkeit des Auswahlcursors oder einer ausgewählten Bauteilkontur angesteuert wird.

Nach einer weiteren Lehre gemäß Anspruch 13, welcher eine eigenständige Bedeutung zukommt, wird ein Fertigungssystem mit einer Steuerungsvorrichtung zur Verwendung in einem vorschlagsgemäßen Verfahren beansprucht. Auf alle Ausführungen, die geeignet sind, das Fertigungssystem als solches oder seine Verwendung zu beschreiben, darf verwiesen werden.

Dass die genau eine mit der Steuerungsvorrichtung verbundene Bedieneinheit als ein Joypad ausgeführt ist, hat den Vorteil, dass das Bedienelement zudem ergonomischer in der Handhabung ist als die Verwendung von Tastatur und Computermaus gemäß dem Stand der Technik.

Die vorliegende Erfindung wird nachstehend anhand eines in den Zeichnungen dargestellten Ausführungsbeispieles näher erläutert.

Es zeigen:
- Fig. 1: exemplarisch eine schematische Darstellung einer Bearbeitungsanlage;
- Fig. 2: eine Ansicht einer von einer Anzeigevorrichtung dargestellten Bildschirmansicht, die von einem Computerprogrammprodukt zum Erstellen eines Schachtelungsplanes bereitgestellt wird;
- Fig. 3: schematisch und exemplarisch eine Bedieneinheit zur Bedienung des Computerprogrammprodukts;
- Fig. 4: schematisch und exemplarisch die Verwendung der Bedieneinheit bei der Erstellung eines Schachtelungsplanes; und
- Fig. 5: schematisch und exemplarisch die Verwendung gemäß Fig. 4 am Beispiel einer Positionierung unterschiedlicher Bauteilkonturen für Werkstücke in zweidimensionalen Planungsebene.

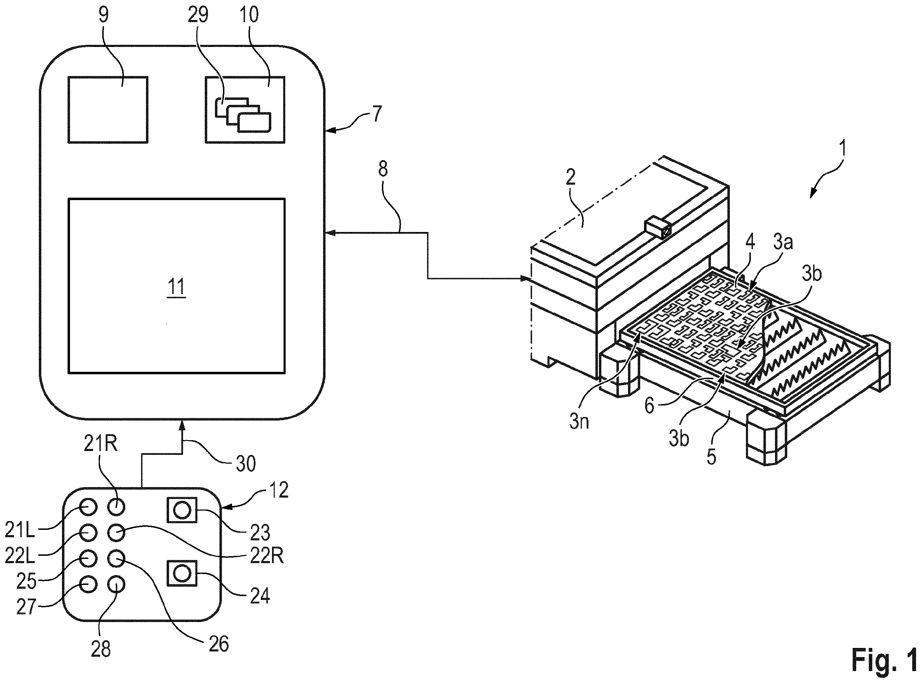

In Fig. 1 ist exemplarisch eine schematische Darstellung einer als CNC-gesteuerten Flachbett-Schneidemaschine ausgeführten Bearbeitungsanlage 1, insbesondere Laserbearbeitungsanlage, gezeigt, die Teil eines Fertigungssystems ist. Die Bearbeitungsanlage 1 umfasst ein Hauptgehäuse 2, in dem der Schneidprozess mit einem Laserstrahl durchgeführt wird. Insbesondere wird ein Fokus des Laserstrahls von einem Steuerungssystem entlang vorgegebener in einem Bearbeitungsbereich angeordneten Schneidlinien über ein Material geführt, um aus diesem Werkstücke 3a, 3b, 3c, ..., 3n mit spezifischen Formen aus einer sich im Wesentlichen zweidimensional erstreckenden Materialtafel 4 aus einem Metall auszuschneiden. Wie aus Fig. 1 ersichtlich ist, können die auszuschneidenden Werkstücke 3a, 3b, 3c, ..., 3n unterschiedliche Bauteilkonturen aufweisen. Die Bearbeitungsanlage 1 umfasst des Weiteren einen Palettenwechsler 5, der dazu ausgebildet ist, eine oder mehrere Paletten 6 während der Fertigung zu positionieren. Auf einer Palette 6 kann die zu schneidende Materialtafel 4 (als Roh- oder Ausgangsmaterial) gelagert und in das Hauptgehäuse 2 für den Schneidvorgang eingebracht werden. Nach dem vollendeten Schneidvorgang kann die Palette 6 mit einer geschnittenen Materialtafel 4 aus dem Hauptgehäuse 2 gefahren werden, sodass die geschnittenen Werkstücke 3a, 3b, 3c, ..., 3n absortiert werden können.

Zur Ansteuerung der Bearbeitungsanlage 1 umfasst das Fertigungssystem eine Steuerungsvorrichtung 7. Die Steuerungsvorrichtung 7 steht mit der Bearbeitungsanlage 1 durch ein drahtloses oder drahtgebundenes Kommunikationssystem 8 zwecks Datenübertragung zur Ansteuerung der Schneidprozesse in Verbindung. Im Allgemeinen sind die Steuerungsvorrichtung 7 und die Bearbeitungsanlage 1 räumlich voneinander getrennt angeordnet. Die Steuerungsvorrichtung 7 kann beispielsweise als ein Arbeitsplatzrechner ausgeführt sein. Cloudbasierte Lösungen sind ebenfalls denkbar.

Der Schachtelungsplan wird in einer dem Schneidvorgang vorausgehenden Planungsphase mittels der Steuerungsvorrichtung 7 oder in einer eigenständigen Planungseinheit erstellt. Die Steuerungsvorrichtung 7 umfasst eine Recheneinheit 9, eine Speichereinheit 10 sowie zumindest eine Anzeigevorrichtung 11. In der Speichereinheit 10 ist ein Computerprogrammprodukt zur Erstellung eines Schachtelungsplanes hinterlegt, welches von der Recheneinheit 9 ausgeführt wird. Für die Bedienung des Computerprogrammproduktes zur Erstellung eines Schachtelungsplanes wird genau eine mit der Steuerungsvorrichtung 7 verbundene Bedieneinheit 12 verwendet. Die lediglich schematisch dargestellte Bedieneinheit 12 ist durch eine Datenverbindung 30, vorzugsweise drahtgebunden, mit der Steuerungsvorrichtung 7 verbunden.

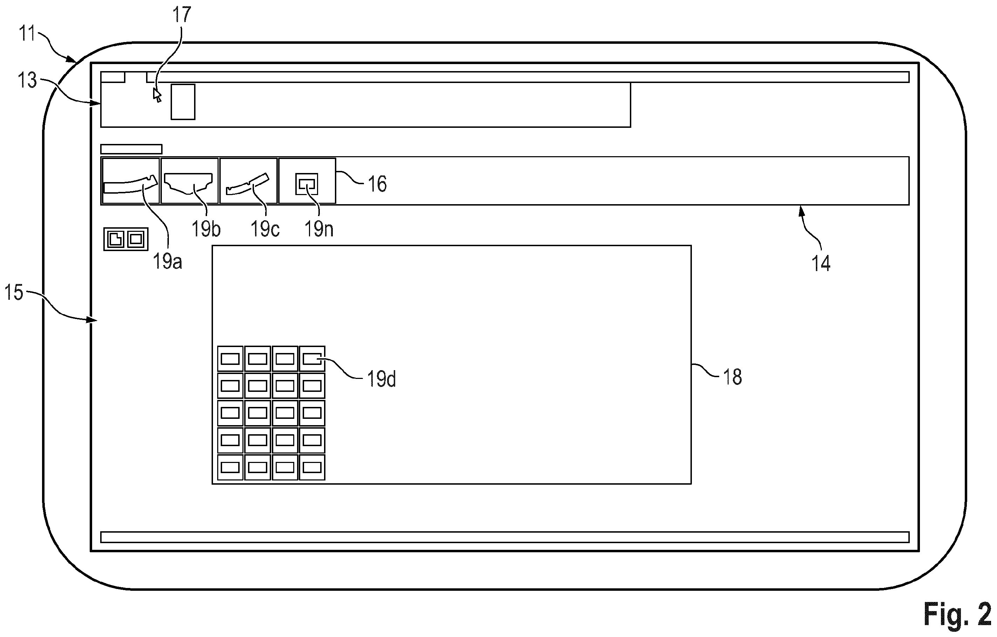

Die Darstellung in Fig. 2 zeigt eine Ansicht einer von der Anzeigevorrichtung 11 dargestellten Bildschirmansicht, die von dem Computerprogrammprodukt zum Erstellen eines Schachtelungsplanes bereitgestellt wird. Die Bildschirmansicht zeigt eine Menüleiste 13, welche im gezeigten Beispiel horizontal verlaufend am oberen Rand der Anzeigevorrichtung 11 positioniert ist. Darunter ist ein Anzeigefeld 14 angeordnet, welches der Darstellung einer Stückliste 16 von aus der Materialtafel 4 auszuschneidenden Werkstücken 3a, 3b, 3c, ..., 3n dient. Lediglich beispielhaft ist eine kurze, d.h. nur wenige Werkstücke 3a, 3b, 3c, ..., 3n umfassende, Stückliste 16 dargestellt. Grundsätzlich kann eine Stückliste 16 eine deutlich höhere Anzahl an Werkstücken 3a, 3b, 3c, ... 3n umfassen, so dass die Größe des Anzeigefeldes 14 nicht ausreicht, um alle auswählbaren Werkstücke 3 gleichzeitig darzustellen. In einem solchen Fall werden die weiteren Werkstücke 3a, 3b, 3c, ...3n der Stückliste 16 durch sogenannte - nicht dargestellte - Bildlaufleisten, die beispielsweise vertikal verlaufend an einem der Seitenränder des Anzeigefeldes 14 angeordnet sein können, zur Ansicht und zur Auswahl durch einen über die sichtbare Anzeigefläche der Anzeigevorrichtung 11 beweglichen Auswahlcursor 17 zugänglich gemacht. Unterhalb des Anzeigefeldes 14 befindet sich ein Arbeitsbereich 15, in welchem eine zweidimensionale Planungsebene 18 dargestellt wird. Die Planungsebene 18 bildet die Materialtafel 4, in Abhängigkeit von der durch die Anzeigevorrichtung 11 darstellbaren Größe maßstäblich, ab.

Den auszuschneidenden Werkstücken 3a, 3b, 3c, ..., 3n sind entsprechende Bauteilkonturen 19a, 19b, 19c, ..., 19n aus einer der in der Speichereinheit 10 der Steuerungsvorrichtung 7 hinterlegten Stücklisten 16 zugeordnet, die von einem Benutzer ausgewählt und in der von der Anzeigevorrichtung 11 der Steuerungsvorrichtung 7 dargestellten zweidimensionalen Planungsebene 18, welche die Materialtafel 4 virtuell abbildet, angeordnet werden. Durch diese Anordnung wird der Schachtelungsplan erstellt, mit dem Ziel, durch eine geeignete Auswahl und Anordnung der verschiedenen Bauteilkonturen 19a, 19b, 19c, ..., 19n in der Planungsebene 18 verbleibende Zwischenräumen zwischen den verschiedenen Bauteilkonturen 19a, 19b, 19c, ..., 19n zu minimieren. Dies dient dazu, die zur Verfügung stehende Materialtafel 4 bei der Durchführung des Schneidprozesses anhand des erstellten Schachtelungsplanes optimal zu nutzen.

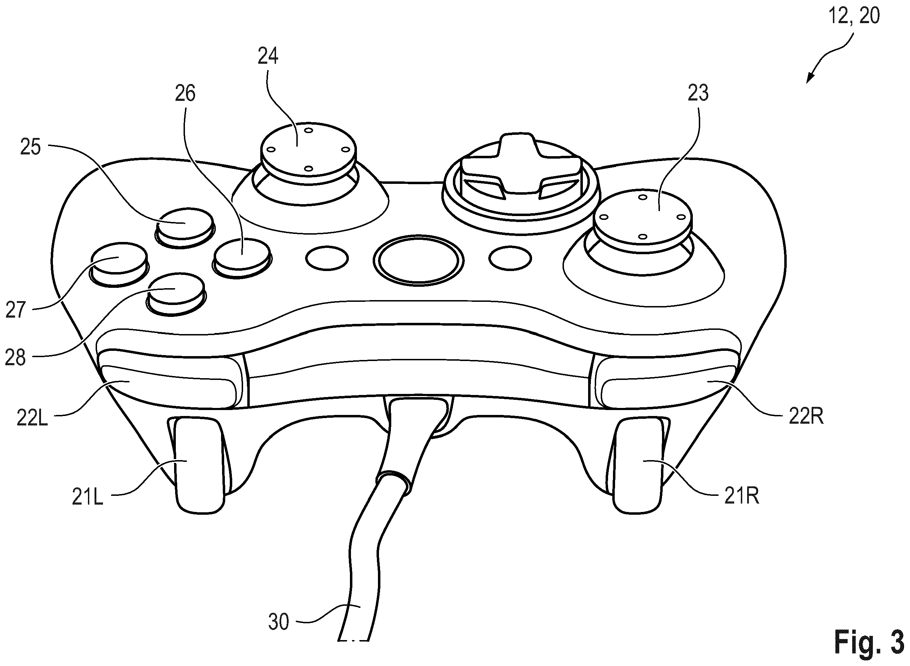

Fig. 3 zeigt schematisch und exemplarisch eine Darstellung der genau einen Bedieneinheit 12 zur Bedienung respektive Ansteuerung des Computerprogrammprodukts. Um das Erstellen eines Schachtelungsplanes zu beschleunigen, ist eine flexiblere und einfachere Bedienung erforderlich, als dies die konventionellen, im Stand der Technik verwendeten Bedienmittel Tastatur und Computermaus ermöglichen.

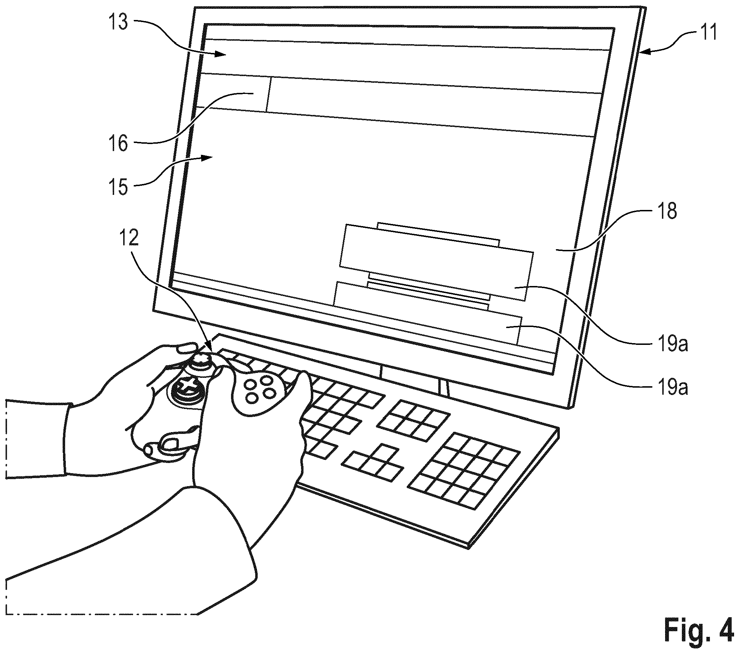

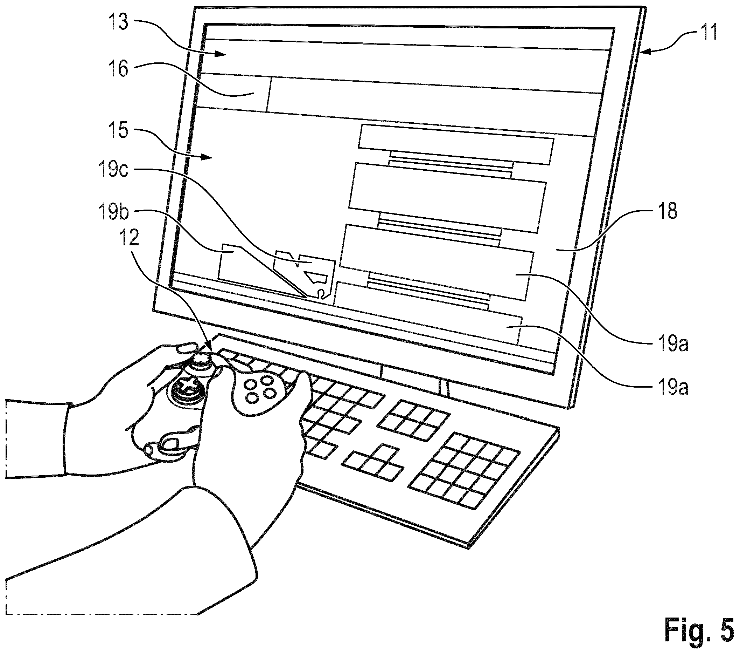

Die mit der Steuerungsvorrichtung 7 verbundene genau eine Bedieneinheit 12 ist als ein Joypad 20 ausgeführt, welches auch unter der Bezeichnung Gamepad geläufig ist. Die als Joypad 20 bzw. Gamepad ausgeführte Bedieneinheit 12 weist gegenüber Tastatur und Computermaus den Vorteil auf, dass diese ergonomischer in der Handhabung ist. Besonders vorteilhaft ist dabei die beidhändige Bedienbarkeit der Bedieneinheit 12. Dadurch wird ein ermüdungsfreieres Arbeiten ermöglicht. Die sich aus der beidhändigen Bedienbarkeit der Bedieneinheit 12, wie sie in den Fig. 4 und 5 gezeigt ist, ergebenden Vorteile werden für die Vereinfachung der Bedienung des Computerprogrammprodukts genutzt.

So besteht ein wesentlicher Vorteil darin, dass die Bedieneinheit 12 mehrere von einem Benutzer zu betätigende unidirektionale Bedienelemente 21R, 21L, 22R, 22L, 25, 26, 27, 28 sowie zumindest zwei direktionale Richtungspads 23, 24 umfasst. Die unidirektionalen Bedienelemente 21R, 21L, 22R, 22L, 25, 26, 27, 28 sind als Taster ausgeführt, die bei Betätigung eine Bewegung in lediglich einer Bewegungsrichtung erlauben. Die beiden direktionale Richtungspads 23, 24 sind als hebelförmige oder joystickartige Bedienmittel ausgeführt, die eine mehrachsige Bewegung ermöglichen.

Die für die Bedienung notwendige Belegung der Bedienelemente 21R, 21L, 22R, 22L, 25, 26, 27, 28 sowie der zumindest zwei direktionale Richtungspads 23, 24 mit unterschiedlichen Funktionen respektive Steuerbefehlen wird nachfolgend erläutert. Hierzu wird von der Recheneinheit 9 zumindest ein in der Speichereinheit 10 der Steuerungsvorrichtung 7 hinterlegter Steuerungsalgorithmus 29 ausgeführt, durch welchen den unidirektionalen Bedienelementen 21R, 21L, 22R, 22L, 25, 26, 27, 28 sowie den zumindest zwei Richtungspads 23, 24 der Bedieneinheit 12 von diesen auszuführende Steuerbefehle zugewiesen werden.

Den beiden Bedienelemente 21R, 22R können Steuerbefehle zugewiesen werden, durch die eine Auswahl einer Bauteilkontur 19a, 19b, 19c, ..., 19n aus der von der Anzeigevorrichtung 11 dargestellten Stückliste 16 durchgeführt wird. Zudem können durch die zwei Bedienelemente 21R, 21L eine gegensinnige Ansteuerung der Bewegung des Auswahlcursors 17 entlang der der dargestellten Stückliste 16 zugeordneten Bildlaufleiste durchgeführt werden.

Zumindest einem weiteren Bedienelement 22R, 22L der Bedieneinheit 12 kann ein Steuerbefehl zugewiesen werden, durch den beim Betätigen des Bedienelementes 22R, 22L das Drehen der ausgewählten Bauteilkontur 19a, 19b, 19c, ..., 19n um einen voreingestellten Winkel angesteuert wird. Der Wert für einen voreingestellten Winkel kann in der Speichereinheit 10 hinterlegt sein. Dieser kann durch den Benutzer geändert werden. Das Drehen erfolgt in diskreten Schritten in Abhängigkeit von der Anzahl der Betätigung des unidirektionalen Bedienelementes 22R, 22L.

Dem weiteren Bedienelement 26 der Bedieneinheit 12 kann ein Steuerbefehl zugewiesen werden, durch den beim Betätigen des Bedienelementes 26 eine wechselweise Änderung zwischen einem ersten Wert des voreingestellten Winkels auf einen zweiten, höheren, Wert des voreingestellten Winkels durchgeführt wird. Der dem Bedienelement 22R oder 22L zugewiesene erste Wert für den voreingestellten Winkel lässt sich durch das einmalige Betätigen eines der Bedienelemente 22R oder 22L auf den zweiten Wert ändern. Ein erneutes Betätigen eines der Bedienelemente 22R oder 22L ändert den zweiten Wert zurück auf den ersten Wert des voreingestellten Winkels. So kann beispielsweise der erste Wert 1° und der zweite Wert 10° betragen. Hiervon abweichende Wertepaare sind einstellbar. Durch das wechselweise Ändern der Werte für den voreingestellten Winkel lässt sich der Vorgang des Drehens einer ausgewählten Bauteilkontur 19a, 19b, 19c, ..., 19n vereinfachen und beschleunigen.

Zusätzlich kann dem weiteren Bedienelement 25 der Bedieneinheit 12 ein Steuerbefehl zugewiesen werden, durch den beim Betätigen des Bedienelementes 25 eine Drehung der ausgewählten Bauteilkontur 19a, 19b, 19c, ..., 19n um einen Winkel von 90° angesteuert wird.

Den unidirektionalen Bedienelementen 27 und 28 können beispielsweise frei programmierbare Makros zugewiesen werden.

Durch die Bewegung zumindest eines der beiden direktionalen Richtungspads 23, 24 können von der Bedieneinheit 12 Steuersignale generiert und von der Steuerungsvorrichtung 7 empfangen werden, die von der Recheneinheit 9 in Bewegungskoordinaten umgewandelt werden, durch welche eine Bewegung des Auswahlcursors 17 oder einer mittels des Auswahlcursors 17 ausgewählten Bauteilkontur 19a, 19b, 19c, ..., 19n auf der Anzeigevorrichtung 11 angesteuert wird.

Den zumindest zwei Richtungspads 23, 24 wird jeweils ein Steuerbefehl zugewiesen, durch den jedem Richtungspad 23, 24 eine unterschiedliche Bewegungsgeschwindigkeit für die Bewegung des Auswahlcursors 17 oder einer ausgewählten Bauteilkontur 19a, 19b, 19c, ..., 19n auf der Anzeigevorrichtung 11 zugewiesen wird. Hierdurch lässt sich durch eine Betätigung des einen Richtungspads 23 einerseits eine langsame und exakte Bewegung zum Schachteln der jeweils ausgewählten Bauteilkontur 19a, 19b, 19c, ..., 19n darstellen. Andererseits kann innerhalb der Planungsebene 18 eine schnelle Bewegung des Auswahlcursors 17 bzw. der jeweils ausgewählten Bauteilkontur 19a, 19b, 19c, ..., 19n durch eine Betätigung des anderen Richtungspads 24 bewirkt werden. Dazu kann dem Richtungspad 23 ein erstes Geschwindigkeitsprofil zugeordnet sein, welches eine langsamere Bewegung des Auswahlcursors 17 bewirkt, während dem anderen Richtungspad 24 ein zweites Geschwindigkeitsprofil zugeordnet sein kann, welches eine schnellere Bewegung des Auswahlcursors 17 bewirkt.

Durch die Betätigung des einen oder des anderen Richtungspads 23, 24 wird somit neben einer beliebigen Bewegungsrichtung auch die damit verbundene Bewegungsgeschwindigkeit vorgegeben.

Zusätzlich kann in Abhängigkeit von einer in einer Richtungsebene liegenden Auslenkrichtung der Richtungspads 23, 24 bei deren im Wesentlichen gleichzeitiger Betätigung durch die Ausführung von Vektoradditionsregeln eine von den jeweils per Steuerbefehl zugewiesenen Bewegungsgeschwindigkeiten abweichende Bewegungsgeschwindigkeit der Bewegung des Auswahlcursors 17 oder einer ausgewählten Bauteilkontur 19a, 19b, 19c, ..., 19n auf der Anzeigevorrichtung 11 zugewiesen werden. Bevorzugt bildet die dem Richtungspads 24 zugewiesene höhere Bewegungsgeschwindigkeit den Ausgangspunkt bei der Ausführung von Vektoradditionsregeln. So kann beispielsweise bei einer identischen Auslenkrichtung der Richtungspads 23, 24 in einer gemeinsamen Richtungsebene die Bewegungsgeschwindigkeit aufaddiert werden, wodurch sich eine dritte, höhere Bewegungsgeschwindigkeit ergibt. Eine gegensätzliche Auslenkrichtung der Richtungspads 23, 24 bewirkt, dass sich eine Bewegungsgeschwindigkeit einstellt, die zwischen den beiden zugewiesenen Bewegungsgeschwindigkeiten liegt.

Bei einer im Wesentlichen gleichzeitigen Betätigung der zumindest zwei Richtungspads 23, 24, bei der das eine Richtungspad 23 in einer gegenüber dem anderen Richtungspad 24 von einer gemeinsamen Richtungsebene abweichenden Auslenkrichtung bewegt wird, kann der Auswahlcursor für die jeweilige durch die Betätigung des jeweiligen Richtungspads 23, 24 vorgegebene Bewegungsrichtung des Auswahlcursors oder einer ausgewählten Bauteilkontur 19a, 19b, 19c, ..., 19n mit der jeweiligen den Richtungspads 23, 24 individuell zugewiesenen Bewegungsgeschwindigkeit bewegt werden.

So kann als ein weiteres Beispiel für die Abhängigkeit von der Auslenkrichtung bei im Wesentlichen gleichzeitiger Betätigung der Richtungspads 23, 24 kann durch eine Auslenkbewegung des Richtungspads 23 nach links und des Richtungspads 24 mit höherer zugewiesener Bewegungsgeschwindigkeit nach vorne eine langsame Bewegung des Auswahlcursors 17 oder der ausgewählten Bauteilkontur 19a, 19b, 19c, ..., 19n nach links und zugleich eine schnelle aufwärtsgerichtete Bewegung bewirkt werden. Entsprechendes gilt für andere Kombinationen der Auslenkrichtung der beiden Richtungspads 23, 24.

Den beiden Richtungspads 23, 24 können unterschiedliche Beschleunigungsprofile zugeordnet werden, mittels derer die Bewegungsgeschwindigkeit des Auswahlcursors 17 oder einer ausgewählten Bauteilkontur 19a, 19b, 19c, ..., 19n angesteuert wird. Die Beschleunigungsprofile können einen rampenförmigen Verlauf aufweisen. Dabei kann der zeitliche Verlauf des Beschleunigungsprofils des Richtungspads 23 flacher sein als der Verlauf des Beschleunigungsprofils des Richtungspads 24. Somit wird bei einer nur geringfügigen Bewegung einer ausgewählten Bauteilkontur 19a, 19b, 19c, ..., 19n durch das Richtungspad 24 der Beschleunigungsvorgang beendet, bevor die zugewiesene Bewegungsgeschwindigkeit erreicht wurde. Um nun eine zusätzliche Verlangsamung zu bewirken, kann gleichzeitig das Richtungspad 23 betätigt werden, wobei es in der gleichen Richtungsebene liegend in entgegengesetzter Auslenkrichtung bewegt wird. Hierdurch werden feinfühligere Bewegungen bei der Schachtelung ermöglicht.

Fig. 4 zeigt schematisch und exemplarisch die Verwendung der Bedieneinheit bei der Erstellung eines Schachtelungsplanes und Fig. 5 zeigt schematisch und exemplarisch die Verwendung der Bedieneinheit gemäß Fig. 4 am Beispiel einer Positionierung unterschiedlicher Bauteilkonturen 19a, 19b für Werkstücke 3a, 3b in der zweidimensionalen Planungsebene 18.

In Fig. 4 ist eine erste Bauteilkontur 19a in der Planungsebene 18 am unteren Rand positioniert dargestellt. Eine weitere Bauteilkontur 19a ist durch eine hervorgehobene Darstellung als ausgewählt markiert. Durch ein zweifaches Betätigen, d.h. drücken, des Bedienelementes 25 lässt sich die Bauteilkontur 19a um 180° drehen. Durch die kombinierte Betätigung der Richtungspads 23, 24 lässt sich die ausgewählte Bauteilkontur 19a in geringstmöglichem Abstand zu der bereits positionierten ersten Bauteilkontur 19a anordnen, um den Verschnitt der Materialtafel 4 zu minimieren.

In Fig. 5 ist die Planungsebene 18 im Wesentlichen halbseitig mit den Bauteilkonturen 19a gefüllt. Durch eine Mehrfachselektion von Bauteilkonturen 19a lassen sich diese kopieren und einfügen. Hierzu kann beispielsweise den Bedienelementen 27 und 28 ein entsprechender Steuerbefehl zugewiesen werden. Weiterhin ist in Fig. 5 die Anordnung einer weiteren Bauteilkontur 19b in der teilweise belegten Planungsebene 18 gezeigt. Eine ausgewählte dritte Bauteilkontur 19c, die hervorgehoben dargestellt ist, wird zu der ersten bereits positionierten Bauteilkontur 19b in geringstmöglichem Abstand angeordnet.

### Bezugszeichenliste

| | | | |
|---|---|---|---|
| 1 | Bearbeitungsanlage | 26 | Bedienelement |
| 2 | Hauptgehäuse | 27 | Bedienelement |
| 3a | Werkstück | 28 | Bedienelement |
| 3b | Werkstück | 29 | Steuerungsalgorithmus |
| 3c | Werkstück | 30 | Datenverbindung |
| 3n | Werkstück | | |
| 4 | Materialtafel | | |
| 5 | Palettenwechsler | | |
| 6 | Palette | | |
| 7 | Steuerungsvorrichtung | | |
| 8 | Kommunikationssystem | | |
| 9 | Recheneinheit | | |
| 10 | Speichereinheit | | |
| 11 | Anzeigevorrichtung | | |
| 12 | Bedieneinheit | | |
| 13 | Menüleiste | | |
| 14 | Anzeigefeld | | |
| 15 | Arbeitsbereich | | |
| 16 | Stückliste | | |
| 17 | Auswahlcursor | | |
| 18 | Planungsebene | | |
| 19a | Bauteilkontur | | |
| 19b | Bauteilkontur | | |
| 19c | Bauteilkontur | | |
| 19n | Bauteilkontur | | |
| 20 | Bauteilkontur | | |
| 21R | Bedienelement | | |
| 21L | Bedienelement | | |
| 22R | Bedienelement | | |
| 22L | Bedienelement | | |
| 23 | Richtungspad | | |
| 24 | Richtungspad | | |
| 25 | Bedienelement | | |

## Patentansprüche

1. Verfahren zum Erstellen eines Schachtelungsplanes, wobei mittels des Schachtelungsplanes ein Schneidprozess einer Bearbeitungsanlage (1) zum Ausschneiden von Werkstücken (3a, 3b, 3c, ..., 3n) aus einer Materialtafel (4) durch eine Recheneinheit (9) einer Steuerungsvorrichtung (7) angesteuert wird, wobei den auszuschneidenden Werkstücken (3a, 3b, 3c, ..., 3n) entsprechende Bauteilkonturen (19a, 19b, 19c, ..., 19n) aus einer in einer Speichereinheit (10) der Steuerungsvorrichtung (7) hinterlegten Stückliste (16) ausgewählt und in einer von einer Anzeigevorrichtung (11) der Steuerungsvorrichtung (7) dargestellten zweidimensionalen Planungsebene (18), welche die Materialtafel (4) abbildet, angeordnet werden,
wobei für das Auswählen von Bauteilkonturen (19a, 19b, 19c, ..., 19n) und das Anordnen der Bauteilkonturen (19a, 19b, 19c, ..., 19n) in der Planungsebene (18) mit minimierten Zwischenräumen genau eine mit der Steuerungsvorrichtung (7) verbundene Bedieneinheit (12) verwendet wird, welche mehrere von einem Benutzer zu betätigende unidirektionale Bedienelemente (21L, 21R, 22L, 22R, 25, 26, 27, 28) sowie zumindest zwei direktionale Richtungspads (23, 24) umfasst, durch die eine Aktivität eines Auswahlcursor (17) auf der Anzeigevorrichtung (11) gesteuert sowie zumindest eine durch den Auswahlcursor (17) ausgewählte Bauteilkontur (19a, 19b, 19c, ..., 19n) zur Minimierung der Zwischenräume gegenüber in der Planungsebene (18) bereits angeordneten Bauteilkonturen (19a, 19b, 19c, ..., 19n) positioniert wird,
wobei von der Recheneinheit (9) zumindest ein in der Speichereinheit (10) der Steuerungsvorrichtung (7) hinterlegter Steuerungsalgorithmus ausgeführt wird, durch welchen den unidirektionalen Bedienelementen (21L, 21R, 22L, 22R, 25, 26, 27, 28) sowie den zumindest zwei Richtungspads (23, 24) der Bedieneinheit (12) von diesen auszuführende Steuerbefehle zugewiesen werden,
**dadurch gekennzeichnet, dass**
die direktionalen Richtungspads (23, 24) hebelförmige oder joystickartige Bedienmittel sind und
den zumindest zwei Richtungspads (23, 24) jeweils ein Steuerbefehl zugewiesen wird, durch den jedem Richtungspad (23, 24) eine unterschiedliche Bewegungsgeschwindigkeit zur Bewegung des Auswahlcursors (17) oder einer ausgewählten Bauteilkontur (19a, 19b, 19c, ..., 19n) auf der Anzeigevorrichtung (11) zugewiesen wird.

2. Verfahren nach Anspruch 1,
**dadurch gekennzeichnet, dass** zwei Bedienelemente (22L, 22R) vorgesehen sind, denen Steuerbefehle zugewiesen werden, durch die eine Auswahl einer Bauteilkontur (19a, 19b, 19c, ..., 19n) aus der von der Anzeigevorrichtung (11) dargestellten Stückliste (16) durchgeführt wird.

3. Verfahren nach Anspruch 2,
**dadurch gekennzeichnet, dass** durch die zwei Bedienelemente (21L, 21R) eine gegensinnige Ansteuerung der Bewegung entlang einer der dargestellten Stückliste (16) zugeordneten Bildlaufleiste durchgeführt wird.

4. Verfahren nach einem der Ansprüche 1 bis 3,
**dadurch gekennzeichnet, dass** zumindest einem weiteren Bedienelement (22L, 22R) der Bedieneinheit (21) ein Steuerbefehl zugewiesen wird, durch den beim Betätigen des Bedienelementes (22L, 22R) das Drehen der ausgewählten Bauteilkontur (19a, 19b, 19c, ..., 19n) um einen voreingestellten Winkel angesteuert wird.

5. Verfahren nach Anspruch 4,
**dadurch gekennzeichnet, dass** einem weiteren Bedienelement (26) der Bedieneinheit (12) ein Steuerbefehl zugewiesen wird, durch den beim Betätigen des Bedienelementes (26) eine wechselweise Änderung zwischen einem ersten Wert des voreingestellten Winkels auf einen zweiten, höheren, Wert des voreingestellten Winkels durchgeführt wird.

6. Verfahren nach einem der Ansprüche 1 bis 5,
**dadurch gekennzeichnet, dass** einem weiteren Bedienelement (25) der Bedieneinheit (12) ein Steuerbefehl zugewiesen wird, durch den beim Betätigen des Bedienelementes (25) eine Drehung der ausgewählten Bauteilkontur (19a, 19b, 19c, ..., 19n) um einen Winkel von 90° angesteuert wird.

7. Verfahren nach einem der Ansprüche 1 bis 6,
**dadurch gekennzeichnet, dass** durch
die Bewegung zumindest eines der beiden direktionalen Richtungspads (23, 24) von der Bedieneinheit (12) Steuersignale generiert und von der Steuerungsvorrichtung (7) empfangen werden, die von der Recheneinheit (9) in Bewegungskoordinaten umgewandelt werden, durch welche eine Bewegung des Auswahlcursors (17) oder einer ausgewählten Bauteilkontur (19a, 19b, 19c, ..., 19n) auf der Anzeigevorrichtung (11) angesteuert wird.

8. Verfahren nach Anspruch 1,
**dadurch gekennzeichnet, dass** dem einen Richtungspad (23) per Steuerbefehl eine Bewegungsgeschwindigkeit zugewiesen wird, die kleiner als eine Bewegungsgeschwindigkeit des anderen Richtungspads (24) ist.

9. Verfahren nach Anspruch 1 oder 8,
**dadurch gekennzeichnet, dass** in Abhängigkeit von einer Auslenkrichtung der zumindest zwei Richtungspads (23, 24) bei deren im Wesentlichen gleichzeitiger Betätigung durch die Ausführung von Vektoradditionsregeln eine von den jeweils per Steuerbefehl zugewiesenen Bewegungsgeschwindigkeiten abweichende Bewegungsgeschwindigkeit der Bewegung des Auswahlcursors (17) oder einer ausgewählten Bauteilkontur (19a, 19b, 19c, ..., 19n) auf der Anzeigevorrichtung (11) zugewiesen werden.

10. Verfahren nach Anspruch 9,
**dadurch gekennzeichnet, dass** bei einer im Wesentlichen gleichzeitigen Bewegung der zumindest zwei Richtungspads (23, 24) in in einer gemeinsamen Richtungsebene liegenden identischen Auslenkrichtung eine Vektoraddition der beiden Bewegungsgeschwindigkeiten durchgeführt werden, und dass bei einer im Wesentlichen gleichzeitigen Bewegung in einander diametral entgegengesetzten Auslenkrichtungen in der Richtungsebene eine Vektorsubtraktion durchgeführt wird.

11. Verfahren nach Anspruch 9 oder 10,
**dadurch gekennzeichnet, dass** bei einer im Wesentlichen gleichzeitigen Betätigung der zumindest zwei Richtungspads (23, 24), bei der das eine Richtungspad (23) in einer gegenüber dem anderen Richtungspad (24) von einer gemeinsamen Richtungsebene abweichenden Auslenkrichtung bewegt wird, der Auswahlcursor (17) für die jeweilige durch die Betätigung des jeweiligen Richtungspads (23, 24) vorgegebene Bewegungsrichtung des Auswahlcursors (17) oder einer ausgewählten Bauteilkontur (19a, 19b, 19c, ..., 19n) mit der jeweiligen den Richtungspads (23, 24) individuell zugewiesenen Bewegungsgeschwindigkeit bewegt werden.

12. Verfahren nach einem der Ansprüche 7 bis 11,
**dadurch gekennzeichnet, dass** den zumindest zwei Richtungspads (23, 24) unterschiedliche Beschleunigungsprofile zugeordnet wird, mittels derer die Bewegungsgeschwindigkeit des Auswahlcursors (17) oder einer ausgewählten Bauteilkontur (19a, 19b, 19c, ..., 19n) angesteuert wird.

13. Fertigungssystem mit einer Steuerungsvorrichtung (7), die Steuerungsvorrichtung (7) eingerichtet zur Ausführung des Verfahrens nach einem der vorhergehenden Ansprüche, und ausgestaltet zur Verwendung in einem Verfahren nach einem der vorhergehenden Ansprüche, wobei genau eine Bedieneinheit (12) mit der Steuerungsvorrichtung (7) verbunden ist, die als ein Joy-pad (20) ausgeführt ist.

## Claims

1. Method for creating a nesting plan, according to which the nesting plan is used to control, via a computing unit (9) of a control device (7), a cutting process of a machining system (1) for cutting parts (3a, 3b, 3c, ..., 3n) from a material plate (4), wherein component contours (19a, 19b, 19c, ..., 19n) corresponding to the parts (3a, 3b, 3c, ..., 3n) to be cut are selected from a parts list (16) stored in a memory unit (10) of the control device (7) and are arranged in a two-dimensional planning level which is represented by a display device (11) of the control device (7) and which represents the material plate (4), wherein, in order to select component contours (19a, 19b, 19c, ..., 19n) and arrange the component contours (19a, 19b, 19c, ..., 19n) in the planning level (18) with minimized gaps between them, exactly one operator unit (12) is used, which is connected to the control device (7) and comprises several unidirectional control elements (21L, 21R, 22L, 22R, 25, 26, 27, 28) to be actuated by a user, as well as at least two directional pads (23, 24) with which an activity of a selection cursor (17) on the display device (11) is controlled and at least one component contour (19a, 19b, 19c, ..., 19n) selected by the selection cursor (17) relative to component contours (19a, 19b, 19c, ..., 19n) already arranged in the planning level (18) in order to reduce the intermediate spaces to a minimum, wherein the computing unit (9) executes at least one control algorithm which is stored in the memory unit (10) of the control device (7) and which assigns to the unidirectional control elements (21L, 21R, 22L, 22R, 25, 26, 27, 28) and to the at least two directional pads (23, 24) of the operator unit (12) control instructions to be executed by them,
**characterised in that**
the directional pads (23, 24) are control means in the form of levers or joysticks, and a control instruction is assigned to each of the at least two directional pads (23, 24), whereby a different movement speed is assigned to each directional pad (23, 24) for the purpose of moving the selection cursor (17) or a selected component contour (19a, 19b, 19c, ..., 19n) on the display device (11).

2. Method according to claim 1, **characterised in that** two control elements (22L, 22R) are provided, to which control instructions are assigned, by means of which a selection of a component contour (19a, 19b, 19c, ..., 19n) is made from the parts list (16) displayed by the display device (11).

3. Method according to claim 2, **characterised in that** the two control elements (21L, 21R) are used to perform an opposite control of movement along an image scroll bar associated with the list of parts (16) displayed.

4. Method according to one of claims 1 to 3, **characterised in that** at least one other control element (22L, 22R) of the operator unit (21) is assigned a control instruction, whereby, when the control element (22L, 22R) is actuated, the rotation of the selected component contour (19a, 19b, 19c, ..., 19n) by a preset angle is controlled.

5. Method according to claim 4, **characterised in that** another control element (26) of the operator unit (12) is assigned a control instruction whereby, when the control element (26) is actuated, a change is made alternately between a first preset angle value and a second, higher value of the preset angle.

6. Method according to one of claims 1 to 5, **characterised in that** a control instruction is assigned to another control element (25) of the operator unit (12), whereby, when the control element (25) is actuated a 90° rotation of the selected component contour (19a, 19b, 19c, ..., 19n) is controlled.

7. Method according to one of claims 1 to 6, **characterised in that** the movement of at least one of the two directional pads (23, 24) causes control signals to be generated by the operator unit (12) and received by the control device (7), which are converted by the computing unit (9) into movement coordinates, by means of which a movement of the selection cursor (17) or of a selected component contour (19a, 19b, 19c, ..., 19n) is activated on the display device (11).

8. Method according to claim 1, **characterised in that** one of the directional pads (23) is assigned, by a control instruction, a movement speed that is lower than the movement speed of the other directional pad (24).

9. Method according to claim 1 or 8, **characterised in that**, depending on the direction of deflection of the at least two directional pads (23, 24), when they are actuated substantially simultaneously, the execution of vector addition rules has the effect of assigning to the movement of the selection cursor (17) or of a selected component contour (19a, 19b, 19c, ..., 19n) on the display device (11) a movement speed that is different from the movement speeds assigned respectively by control instruction.

10. Method according to claim 9, **characterised in that** during a substantially simultaneous movement of the at least two directional pads (23, 24), in an identical deflection direction located in a common direction plane, a vector addition of the two movement speeds is performed, and **in that**, during a substantially simultaneous movement in diametrically opposite deflection directions in the direction plane, a vector subtraction is performed.

11. Method according to claim 9 or 10, **characterised in that**, when the at least two directional pads (23, 24) are actuated substantially simultaneously, during which one directional pad (23) is moved in a deviation direction that deviates from a common direction plane relative to the other directional pad (24), the selection cursor (17) is moved at the respective movement speed individually assigned to the directional pads (23, 24) for the respective direction of movement of the selection cursor (17) or a selected component contour (19a, 19b, 19c, ..., 19n) that has been predefined by the actuation of the respective directional pad (23, 24).

12. Method according to one of claims 7 to 11, **characterised in that** the at least two directional pads (23, 24) are assigned different acceleration profiles, by means of which the speed of movement of the selection cursor (17) or of a selected component contour (19a, 19b, 19c, ..., 19n) is controlled.

13. Manufacturing system comprising a control device (7), the control device (7) being designed for implementing the method according to one of the preceding claims, and being configured for use in a method according to one of the preceding claims, wherein exactly one operator unit (12) is connected to the control device (7), which is designed as a joy-pad (20).

## Revendications

1. Procédé de création d'un plan d'emboîtement, selon lequel le plan d'emboîtement sert à activer, par le biais d'une unité de calcul (9) d'un dispositif de commande (7), un processus de coupe d'une installation d'usinage (1) en vue de la découpe de pièces (3a, 3b, 3c, ..., 3n) dans une plaque de matériau (4), où des contours de composants (19a, 19b, 19c, ..., 19n) correspondant aux pièces (3a, 3b, 3c, ... 3n) à découper sont sélectionnés dans une liste de pièces (16) enregistrée dans une unité de mémoire (10) du dispositif de commande (7) et sont disposés dans un niveau de planification bidimensionnel qui est représenté par un dispositif de visualisation (11) du dispositif de commande (7) et reproduit la plaque de matériau (4), sachant que pour sélectionner des contours de composants (19a, 19b, 19c, ..., 19n) et disposer les contours de composants (19a, 19b, 19c, ..., 19n) dans le niveau de planification (18), avec des espaces intermédiaires réduits à un minimum, on utilise exactement une unité opérateur (12) qui est reliée au dispositif de commande (7) et comprend plusieurs éléments de commande (21L, 21R, 22L, 22R, 25, 26, 27, 28) unidirectionnels à actionner par un utilisateur, ainsi qu'au moins deux pavés directionnels (23, 24) à l'aide desquels on contrôle une activité d'un curseur de sélection (17) sur le dispositif de visualisation (11) et on positionne au moins un contour de composant (19a, 19b, 19c, ..., 19n), choisi par le curseur de sélection (17), par rapport à des contours de composants (19a, 19b, 19c, ..., 19n) déjà disposés dans le niveau de planification (18), en vue de réduire les espaces intermédiaires à un minimum, où l'unité de calcul (9) exécute au moins un algorithme de commande qui est enregistré dans l'unité de mémoire (10) du dispositif de commande (7) et qui attribue aux éléments de commande (21L, 21R, 22L, 22R, 25, 26, 27, 28) unidirectionnels ainsi qu'aux pavés directionnels (23, 24), au nombre d'au moins deux, de l'unité opérateur (12), des instructions de commande devant être exécutées par ceux-ci,
**caractérisé en ce que**
les pavés directionnels (23, 24) sont des moyens de commande en forme de leviers ou de type manette de jeu et qu'une instruction de commande est attribuée respectivement aux pavés directionnels (23, 24), au nombre d'au moins deux, par laquelle une vitesse de mouvement différente est attribuée à chaque pavé directionnel (23, 24), aux fins de déplacer sur le dispositif de visualisation (11) le curseur de sélection (17) ou un contour de composant (19a, 19b, 19c, ..., 19n) sélectionné.

2. Procédé selon la revendication 1, **caractérisé en ce qu'**il est prévu deux éléments de commande (22L, 22R) auxquels sont attribuées des instructions de commande, par le biais desquelles une sélection d'un contour de composant (19a, 19b, 19c, ..., 19n) est opérée dans la liste de pièces (16) affichée par le dispositif de visualisation (11).

3. Procédé selon la revendication 2, **caractérisé en ce que** les deux éléments de commande (21L, 21R) servent à effectuer une activation dans des sens opposés du déplacement le long d'une barre de défilement d'images associée à la liste de pièces (16) affichée.

4. Procédé selon une des revendications 1 à 3, **caractérisé en ce qu'**est attribuée à au moins un autre élément de commande (22L, 22R) de l'unité opérateur (21), une instruction de commande par laquelle, lors de l'actionnement de l'élément de commande (22L, 22R), la rotation, sous un angle préréglé, du contour de composant (19a, 19b, 19c, ..., 19n) sélectionné est activée.

5. Procédé selon la revendication 4, **caractérisé en ce qu'**est attribuée à un autre élément de commande (26) de l'unité opérateur (21), une instruction de commande par laquelle, lors de l'actionnement de l'élément de commande (26), une modification est effectuée en alternance entre une première valeur de l'angle préréglé vers une deuxième valeur, plus élevée, de l'angle préréglé.

6. Procédé selon une des revendications 1 à 5, **caractérisé en ce qu'**est attribuée à un autre élément de commande (25) de l'unité opérateur (21), une instruction de commande par laquelle, lors de l'actionnement de l'élément de commande (25), une rotation d'un angle de 90° du contour de composant (19a, 19b, 19c, ..., 19n) sélectionné est activée.

7. Procédé selon une des revendications 1 à 6, **caractérisé en ce que** le mouvement d'au moins un des deux pavés directionnels (23, 24) a pour effet que des signaux de commande sont générés par l'unité opérateur (12) et sont reçus par le dispositif de commande (7) et transformés par l'unité de calcul (9) en coordonnées de déplacement par lesquels un déplacement du curseur de sélection (17) ou d'un contour de composant (19a, 19b, 19c, ..., 19n) sélectionné est activé sur le dispositif de visualisation (11).

8. Procédé selon la revendication 1, **caractérisé en ce qu'**est attribuée, par instruction de commande, à l'un des pavés directionnels (23), une vitesse de mouvement qui est inférieure à une vitesse de mouvement de l'autre pavé directionnel (24).

9. Procédé selon la revendication 1 ou 8, **caractérisé en ce que**, en fonction de la direction de déviation des pavés directionnels (23, 24), au nombre d'au moins deux, lors de leur actionnement sensiblement simultané, l'exécution de règles d'addition vectorielle a pour effet d'attribuer au déplacement du curseur de sélection (17) ou d'un contour de composant (19a, 19b, 19c, ..., 19n) sélectionné, sur le dispositif de visualisation (11), une vitesse de déplacement qui est différente des vitesses de déplacement attribuées respectivement par instruction de commande.

10. Procédé selon la revendication 9, **caractérisé en ce que** lors d'un mouvement sensiblement simultané des pavés directionnels (23, 24), au nombre d'au moins deux, dans une direction de déviation identique située dans un plan de directions commun, une addition vectorielle des deux vitesses de mouvement est effectuée, et **en ce que** lors d'un mouvement sensiblement simultané dans des directions de déviation diamétralement opposées, dans le plan de directions, une soustraction vectorielle est effectuée.

11. Procédé selon la revendication 9 ou 10, **caractérisé en ce que** lors d'un actionnement sensiblement simultané des pavés directionnels (23, 24), au nombre d'au moins deux, au cours duquel le pavé directionnel (23) est déplacé dans une direction de déviation qui s'écarte d'un plan de directions commun par rapport à l'autre pavé directionnel (24), le curseur de sélection (17) est déplacé à la vitesse de mouvement respective attribuée individuellement aux pavés directionnels (23, 24), pour la direction de déplacement respective du curseur de sélection (17) ou d'un contour de composant (19a, 19b, 19c, ..., 19n) sélectionné, qui a été prédéfinie par l'actionnement du pavé directionnel (23, 24) respectif.

12. Procédé selon une des revendications 7 à 11, **caractérisé en ce que** sont attribués aux pavés directionnels (23, 24), au nombre d'au moins deux, des profils d'accélération différents, à l'aide desquels la vitesse de déplacement du curseur de sélection (17) ou d'un contour de composant (19a, 19b, 19c, ..., 19n) sélectionné est contrôlée.

13. Système de fabrication comprenant un dispositif de commande (7), le dispositif de commande (7) étant conçu pour la mise en œuvre du procédé selon une des revendications précédentes, et étant agencé en vue d'une utilisation dans un procédé selon une des revendications précédentes, dans lequel exactement une unité opérateur (12) est reliée au dispositif de commande (7), laquelle est réalisée sous forme de contrôleur de jeu (20).
